(19) Europäisches Patentamt / European Patent Office / Office européen des brevets

(11) **EP 1 349 898 B1**

(12) **EUROPEAN PATENT SPECIFICATION**

(45) Date of publication and mention
of the grant of the patent:
**24.03.2010 Bulletin 2010/12**

(21) Application number: **02711515.3**

(22) Date of filing: **11.01.2002**

(51) Int Cl.:
*C09D 4/06* (2006.01)  *C08F 290/06* (2006.01)
*C09D 4/00* (2006.01)  *C08F 220/28* (2006.01)
*C03C 25/10* (2006.01)

(86) International application number:
**PCT/NL2002/000017**

(87) International publication number:
**WO 2002/055613 (18.07.2002 Gazette 2002/29)**

(54) **RADIATION CURABLE COMPOSITIONS COMPRISING ALKOXYLATED ALIPHATIC REACTIVE DILUENTS**

DURCH STRAHLUNG HÄRTBARE ZUSAMMENSETZUNGEN MIT ALKOXYLIERTEN ALIPHATISCHEN REAKTIVVERDÜNNERN

COMPOSITIONS RETICULABLES PAR RADIATION, COMPRENANT DES DILUANTS ALIPHATIQUES ALCOXYLES

(84) Designated Contracting States:
**AT BE CH CY DE DK ES FI FR GB GR IE IT LI LU MC NL PT SE TR**

(30) Priority: **12.01.2001 US 260917 P**
**01.02.2001 US 265309 P**

(43) Date of publication of application:
**08.10.2003 Bulletin 2003/41**

(73) Proprietor: **DSM IP Assets B.V.**
**6411 TE Heerlen (NL)**

(72) Inventors:
• **CHAWLA, Chander, Prakash**
**Batavia, IL 60510 (US)**
• **MONTGOMERY, Eva, Irene**
**Woodstock, IL 60098 (US)**

(74) Representative: **van Loon, C.J.J. et al**
**Vereenigde**
**Johan de Wittlaan 7**
**2517 JR Den Haag (NL)**

(56) References cited:
**WO-A-99/08975**

**Description**

Field of the Invention

The present invention relates to radiation curable compositions comprising alkoxylated aliphatic radiation-curable reactive diluents. In addition, the present invention relates to applications for the present compositions.

Background

Radiation-curable compositions have been used in a wide variety of applications, such as, for instance, to provide coatings for optical glass fibers. Optical glass fibers are generally coated with two superposed radiation-cured coatings, which together form a primary coating. The coating which is in direct contact with the glass is called the inner primary coating and the overlaying coating is called the outer primary coating.

It is a characteristic of such compositions that the curing proceeds upon exposure to a radiation source, typically a UV actinic radiation source, for a time sufficient to provide a full cure of the coating compositions at the level of intensity of such source. Examples of typical radiation-curable coatings are described in published European patent application No. 566801, published PCT application WO-A-9103499, and U.S. Pat. Nos. 5,146,531, 5,219,896 and 5,336,563 and WO 99-08 975.

As the demand for coated optical fibers has increased, manufacturers must respond by adding more fiber drawing production lines and by attempting to increase the linear line speeds of the existing fiber drawing production lines. In the latter case, one factor which will determine the upper limit for the line speed will be the curing rate characteristics of the radiation-curable compositions for a given radiation source and intensity.

If the line speed is increased to the extent that cure rate time requirements of the radiation-curable composition are exceeded, the radiation-curable composition will not have received a sufficient amount of radiation to cause complete cure, or cross-linking, of the radiation-curable composition. The linear line production speed is generally inversely related to the amount of radiation striking the optical glass fiber. That is, as the production line speed is increased the amount of radiation exposure to the radiation-curable composition during the production process will necessarily decrease for a given radiation source. Incomplete cure of the radiation-curable composition is undesirable and must be avoided because then the desired protective properties of the incompletely cured primary coating may not be achieved and/or the incompletely cured primary coating may retain tackiness (giving problems in subsequent handling) or a malodorous odor may be present. There may also be an increase in the extractables (undesirable) in the supposedly-cured coating.

In general, radiation-curable inner primary coating compositions cure at a significantly slower rate than radiation-curable outer primary coating compositions. It is believed that the reduced number of radiation-curable functional groups present in inner primary compositions compared to outer primary compositions contributes to the slower cure speed of inner primary coatings. While there exists a greater need for improving the cure speed of the inner primary coating, the need for fast curing speeds of radiation-curable compositions employed in each of the multiple coating layers surrounding optical fibers must be met.

Although line speeds have increased over the years, it is believed that a radiation-curable inner primary coating composition, having a cure speed such that 95% or more of the maximum attainable tensile modulus is attained at an irradiation dose of about 0.30 J/cm$^2$ or less at a thickness of 75 microns, is difficult to achieve. Such a high cure speed radiation-curable composition would also be useful in other applications where cure speed is of importance.

Radiation-curable compositions having fast cure speed can be particularly useful in stereolithography or rapid prototyping processes. Rapid prototyping involves successive curing of defined areas of resin layers on top of each other to make a three-dimensional form that can be used as a prototype, or for making a prototype. A prototype, or model, is often used in order to prepare for making new products.

An example of a rapid prototyping process is the Cubital process described in U.S. Pat. No. 5,031,120 (Pomerantz). In the Cubital process, light is passed through an erasable mask to solidify a layer of a radiation-curable, resin composition in selected areas. The non-solidified portions are removed and replaced by a removable support material, such as wax. Additional layers are added until the desired three-dimensional object is completely formed. The removable support material is commonly a wax which can be removed by melting or dissolving to provide the thereby formed, free three-dimensional object.

Another example of a rapid prototyping process is disclosed in U.S. Pat. No. 4,575,330 (Hull). The Hull process is a scanning method, in which a concentrated beam of ultraviolet light is focused on the surface of a container filled with a liquid radiation-curable, resin composition. The light beam, moving under computer control, scribes a layer of the object onto the surface of the liquid. Wherever the beam strikes the surface, a very thin layer of the radiation-curable, resin composition is crosslinked to form a solid. To make a three-dimensional object, the entire operation is repeated, with the position of the object shifted slightly each time, whereby the object is built up layer by layer.

Examples of radiation-curable, resin compositions that have been used in rapid prototyping methods are disclosed in U.S. Pat. Nos. 5,418,112 and 5,434,196. There is always a need for a faster curing composition for use in rapid prototyping processes to decrease production time.

Radiation-curable compositions having fast cure speed can also be useful in the production of digital versatile disks (DVD). Digital versatile disks may be created by variations on a few basic processes, as disclosed, for example, by U.S. Patent No. 4,310,919 and U.S. Patent No. 4,423,137, the complete disclosures of which are fully incorporated herein by reference. Three technologies are currently employed for DVD bonding, namely contact adhesives, cationic or PSA UV bonding, and free radical UV bonding. The formulations must provide adhesion between the aluminum and polycarbonate layers, the gold and polycarbonate layers, and the lacquer and the polycarbonate layers. Furthermore, the adhesive coatings must have a high cure speed. However, strong, long-lasting adhesion between DVD component layers, without compromising the other desirable properties such as good release from molds or the optical properties of the polycarbonate, is not achievable with the existing systems. For example, coatings which possess strong adhesion to metallic surfaces may do so at the expense of good release or desirably fast cure speed.

Radiation-curable compositions demonstrating fast cure speed and strong adhesion to a wide variety of substrates can also be useful as general-use radiation-curable adhesives. Typically such adhesives can be employed in the manufacture of coated articles or laminated articles such as eye-glass lenses or automobile safety glass. Other uses for radiation-curable adhesives range from laboratory equipment manufacture, surgical instrument applications, and any general use for a radiation-curable adhesive used under circumstances requiring fast cure speed. Conventional adhesives, not cured by exposure to radiation, frequently demonstrate problems of setting too quickly without allowing time for adjustment of physical placement of the substrate to which the adhesive is applied. In safety-glass or other laminated glass applications, air bubbles often are formed and may become trapped between the layers of glass. Such errors in production can not be easily corrected using conventional adhesion processes and thus result in considerable delays in production and the costly waste of materials. In contrast, radiation-curable adhesives used in such applications permit any necessary adjustments of the substrates in relation to each other prior to curing the radiation-curable adhesive by exposure to radiation.

A high cure speed radiation-curable composition would also be useful for forming protective or decorative coatings on substrates, such as wood, glass, paper, porcelain and plastics. For example, a high cure speed radiation-curable composition would be very desirable for use as a coating on a wood or vinyl (plastic) floor. The faster curing coating would generally require less exposure to UV light to cure and the coated floor would be ready for use in a shorter time period.

Accordingly, it is an object of the present invention to provide radiation-curable compositions with improved, i.e. faster, cure speed.

In addition, it is an object of the present invention to provide radiation-curable compositions with improved, i.e. relatively low, viscosity.

Furthermore, it is an object of the present invention to provide coatings having a low modulus.

Also, it is an object of the present invention to provide radiation-curable compositions having a fast cure speed and a relatively low viscosity which, after cure, exhibit a low modulus.

Summary of the Invention

The present invention provides radiation curable compositions as defined in claim 1 comprising an alkoxylated aliphatic reactive diluent. In particular, the present inventions provides compositions comprising an alkoxylated aliphatic reactive diluent wherein the composition has an improved cure speed.

One aspect of the invention relates to compositions wherein the alkoxylated aliphatic reactive diluent comprises from 7-20 carbon atoms, preferably from 8-15 carbon atoms, not counting the carbon atoms present in the alkoxy moiety/moieties and the carbons in the radiation curable moiety/moieties.

Detailed Description of the Invention

"Aliphatic" refers in this application to "being exclusive of an aromatic ring". All weight percentages given in this application are relative to the weight of the total composition, unless indicated otherwise.

The compositions of the present invention comprise one or more alkoxylated aliphatic reactive diluents. A reactive diluent comprises one or more radiation-curable functional groups, such as, for instance, one or more (meth) acrylate, vinyl ether, vinyl, acrylamide, maleate, or fumarate groups, or combinations thereof. The radiation-curable vinyl group can participate in thiol-ene or amine-ene cure. Preferably, the reactive diluent comprises an acrylate group. The alkoxylated aliphatic reactive diluent may have any suitable number of radiation-curable functional groups, and comprises at least 1 such functional group. Preferably the alkoxylated aliphatic reactive diluent comprises less than 8 functional groups, for instance less than 5 functional groups, less than 3 functional groups, or less than 2 functional groups. Preferably the present compositions comprise a monofunctional alkoxylated diluent.

An advantage of alkoxylated aliphatic diluents is that they can improve the cure speed of a composition when compared to a comparable composition wherein the alkoxylated aliphatic diluent has been replaced with an equal weight amount of a comparable aliphatic diluent that is not alkoxylated (e.g., replacing ethoxylated lauryl acrylate in a certain composition with an equal weight amount of lauryl acrylate). Furthermore, it has been noticed that in certain embodiments alkoxylated aliphatic diluents may provide compositions that after cure have a relatively low modulus. In applications where excellent water resistance is required, care should be taken that the amount of alkoxy moieties in the composition, in particular in the case of ethoxy moieties, is not too high.

Preferably the alkoxylated aliphatic reactive diluents comprise on average at most 15 alkoxy groups, more preferably at most 12 alkoxy groups, even more preferably at most 10 alkoxy groups, and most preferably at most 7 alkoxy groups. Preferably the alkoxylated aliphatic reactive diluents comprise on average 1 or more alkoxy groups, more preferably 2 or more alkoxy groups, even more preferably 3 or more alkoxy groups, and most preferably more than 3 alkoxy groups.

It is also preferred that the alkoxylated aliphatic reactive diluent is not only absent of an aromatic ring, but that the alkoxylated aliphatic reactive diluent is absent of any ring structure.

Preferably the composition comprises, relative to the total weight of the composition, 1-99 wt% of an alkoxylated aliphatic reactive diluent, more preferably 1-50 wt% of an alkoxylated aliphatic reactive diluent, even more preferably 5-50 wt% of an alkoxylated aliphatic reactive diluent, and most preferably 10-40 wt% of an alkoxylated aliphatic reactive diluent.

The alkoxy groups of the alkoxylated aliphatic reactive diluent may be any suitable alkoxy groups. For instance, the aliphatic reactive diluent may be an ethoxylated compound, a propoxylated compound, and the aliphatic reactive diluent may also comprise combinations of different alkoxy groups. Ethoxylated compounds are particularly preferred.

The alkoxylated aliphatic reactive diluent preferably comprises, not taking into account the carbon atoms present in the alkoxy groups and the radiation-curable groups, at least 7 carbon atoms, more preferably at least 8 carbon atoms, and the diluent may also comprise at least 9 carbon atoms. Furthermore, the alkoxylated aliphatic reactive diluent preferably comprises, not taking into account the carbon atoms present in the alkoxy groups and the radiation-curable groups, less than 25 carbon atoms, more preferably at most 20 carbon atoms, and most preferably less than 15 carbon atoms. For example, ethoxylated isodecyl acrylate would be calculated as comprising 10 carbon atoms (i.e. only the carbon atoms from the isodecyl moiety are taken into account, the ethoxy carbons and the acrylate carbons are not taken into account), and similarly also ethoxylated isodecyl methacrylate would be calculated to comprise 10 carbon atoms, because the additional methyl group is part of the radiation curable functional group and thus not taken into account. Particularly preferred reactive diluents are alkoxylated lauryl acrylate, alkoxylated isodecyl acrylate, and alkoxylated 2-ethylhexyl acrylate.

The composition may optionally comprise one or more additional reactive diluents besides the alkoxylated aliphatic dluent(s). Preferably, such an optional additional reactive diluent is a monomer having an acrylate or vinyl ether functionality and a C4-C20 alkyl or polyether moiety. Examples of such reactive diluents include hexylacrylate, 2-ethylhexylacrylate, isobornylacrylate, decylacrylate, laurylacrylate, stearylacrylate, laurylvinylether, 2-ethylhexylvinyl ether, N-vinyl formamide, isodecyl acrylate, isooctyl acrylate, vinyl-caprolactam, and N-vinylpyrrolidone.

Another type of optional additional reactive diluent is a compound comprising an aromatic group. Examples of diluents having an aromatic group include: ethyleneglycolphenyletheracrylate, polyethyleneglycolphenyletheracrylate, polypropyleneglycolphenyletheracrylate, and alkyl-substituted phenyl derivatives of the above monomers, such as polyethyleneglycolnonylphenyletheracrylate. Preferred aromatic diluents, when used, include ethoxylated nonylphenol acrylate and propoxylated nonylphenol acrylate.

Furthermore, a reactive diluent can contain two groups capable of polymerization using actinic radiation. A diluent having three or more of such reactive groups can be present as well. Examples of such monomers include:

$C_2$-$C_{18}$ hydrocarbondioldiacrylates,
$C_4$-$C_{18}$ hydrocarbondivinylethers,
$C_3$-$C_{18}$ hydrocarbontrioltriacrylates, and
the polyether analogs thereof, such as
1,6-hexanedioldiacrylate,
trimethylolpropanetriacrylate,
hexanedioldivinylether,
triethyleneglycoldiacrylate,
pentaeritritoltriacrylate,
tripropyleneglycol diacrylate, and
alkoxylated bisphenol A diacrylate.

Optional additional reactive diluents are, when used, generally present in amounts of 1-65 wt%, preferably 1-40 wt%, such as for instance 5-25 wt%.

The compositions of the present invention may also comprise one or more radiation-curable oligomers. The amount of the oligomer in the composition can be, for example, 10 wt.% to 95 wt.%, preferably between 20 wt.% to 90 wt.%, more preferably at least 35 wt.%, and most preferably at least 50 wt%. If more than one oligomer is present, then the wt.% of each oligomer is added.

Radiation-curable oligomers can comprise one or more radiation-curable end groups and an oligomer backbone. The end-group provides a cure mechanism, whereas the backbone provides suitable mechanical properties upon cure. In addition, the oligomer can comprise one or more linking groups such as a urethane- or urea-containing moiety which further can improve the mechanical performance of cured compositions. The linking groups can link an oligomeric backbone moiety to the radiation-curable end-group, or link oligomeric backbone moieties to themselves. Hence, for example, radiation-curable oligomers can be prepared from three basic components (backbone, linking, and radiation-curable components) and can be represented by structures such as, for example:

$$R-[L-B]_x-L-R$$

where R is a radiation-curable group, L is a linking group, and B is a backbone moiety. The variable x indicates the number of backbone moieties per oligomer molecule. This value X can be controlled by, for example, control of the reaction stoichiometry during oligomer synthesis. Typically, X is designed to be 1 or 2. In this representation, L and B are difunctional moieties, but oligomers can also be prepared from tri- and higher functional L and B moieties to provide branching. In the present invention, branching points in the oligomer are preferably present, and preferably result from use of at least some tri-functional groups L.

In particular, typical radiation-curable urethane acrylate oligomers according to the present invention are prepared from (i) at least one ingredient which reacts to provide the radiation-curable acrylate group R, (ii) at least one ingredient which reacts to provide the urethane linking group L, and (iii) at least one ingredient which reacts to provide the backbone B. Different urethane acrylate oligomer synthetic strategies are disclosed in, for example, U.S. Patent No. 5,093,386. Other synthetic methods, however, may be used to prepare equivalent structures. These methods may be adapted by methods known in the art to provide urea linkages, methacrylate linkages, and other common types of linkages found in radiation-curable oligomers.

The radiation-curable oligomer can cure by reaction of its radiation-curable groups, R, via a free-radical mechanism or by cationic mechanism. A free-radical cure, however, is preferred. Ethylenically unsaturated groups are preferred. Exemplary radiation-curable groups include (meth)acrylate, vinyl ether, vinyl, acrylamide, maleate, and fumarate. The radiation-curable vinyl group can participate in thiol-ene or amine-ene cure. Most preferably, the radiation-curable group is an acrylate if fast cure speed is desired.

Preferably, the oligomer comprises at least two radiation-curable groups, and preferably, at least two ethylenically unsaturated groups. The oligomer, for example, can comprise two, three, or four radiation-curable groups which are all preferably ethylenically unsaturated groups. There is no strict upper limit on the number of radiation-curable groups per oligomer, but in general, the number of radiation-curable groups is less than 10, and preferably, less than 8.

The oligomer can comprise copolymeric structures including random and block copolymeric structures. Methods known in the art can be used to prepare such copolymeric structures. For example, backbone moieties can be copolymeric. Also, a one-pot synthesis of multiple oligomers can be executed with use of multiple backbone moieties. Using multiple backbone moieties can yield at least some block copolymeric oligomers in the pre-polymer system. Formulation design of copolymeric oligomers can result in a better balance of properties and provide synergistic effects, which usually is crucial for fiber optic materials. In addition, oligomer blends or mixtures can be used to balance properties and provide synergistic effects.

For processing reasons, it is important to control the oligomer system's viscosity and flow behavior. For practical reasons, oligomers should be easy to remove from the reactors and flasks in which they are synthesized. If viscosity is too high, it will be difficult to process the oligomer system during formulation, even with some monomer diluent present.

If an oligomeric polyether diol is used, the polyether may include, for example, substantially non-crystalline polyethers. The oligomer may include polyethers comprising repeating units of one or more of the following monomer units:

$$-O-CH_2-CH_2-$$

$$-O-CH_2-CH_2-CH_2-$$

$$-O-CH_2-CH(CH_3)-$$

$$-O-CH_2-CH_2-CH_2-CH_2-$$

-O-CH$_2$-CH(CH$_3$)-CH$_2$-

-O-CH$_2$-CH(CH)$_3$-CH$_2$-CH$_2$-

-O-CH(CH$_3$)-CH$_2$-CH$_2$-CH$_2$-

-O-CH(CH$_2$CH$_3$)-CH$_2$-

-O-CH$_2$-C(CH$_3$)(CH$_3$)-,

and the like.

An example of a polyether polyol that can be used is the polymerization product of (i) tetrahydrofuran, or (ii) a mixture of 20 percent by weight of 3-methyltetrahydrofuran and 80 percent by weight of tetrahydrofuran, both of which have undergone a ring opening polymerization. This latter polyether copolymer contains both branched and non-branched oxyalkylene repeating units and is marketed as PTGL 1000 (Hodogaya Chemical Company of Japan). Another example of a polyether in this series which can be used is PTGL 2000 (Hodogaya Chemical Company). Butyleneoxy repeat units are preferred to impart flexibility to one oligomer in particular and the pre-polymer system in general. Preferred oligomers also include ethyleneoxy-butyleneoxy (EOBO) copolymers.

If a polyolefin diol is used, the polyolefin is preferably a linear or branched hydrocarbon containing a plurality of hydroxyl end groups. Fully saturated, for example, hydrogenated hydrocarbons, are preferred because the long term stability of the cured coating increases as the degree of unsaturation decreases. Examples of hydrocarbon diols include, for example, hydroxyl-terminated, fully or partially hydrogenated 1,2-polybutadiene; 1,4- and 1,2-polybutadiene copolymers, 1,2-polybutadiene-ethylene or -propylene copolymers, polyisobutylene polyol; and mixtures thereof.

Other suitable oligomers may include polyester oligomers, polycarbonates oligomers, acrylic oligomers, and mixtures of any of the aforementioned oligomer types.

The linking group of the oligomer can be a urethane or urea group, and preferably is a urethane group. It is well-known in the art that urethane linkages can be formed by reaction of a polyfunctional isocyanate with a hydroxy compound including a hydroxy-containing backbone component or a hydroxy-containing radiation-curable component.

Polyfunctional isocyanates include diisocyanates, triisocyanates, and higher order polyisocyanates which can provide the linking group. As known in the art, isocyanate compounds can be trimerized to form isocyanurate compounds which can provide the linking group. Hence, polyisocyanate compounds can be oligomerized or polymerized to form higher order polyisocyanates comprising isocyanurate group. In certain embodiments, particularly when a low glass transition temperature is desired, it is preferred that at least 50 mol% of the polyisocyanates to prepare the oligomer are absent of a ring structure, more preferably at least 65 mol%, even more preferably at least 75 mol%, and most preferably 100 mol% of the polyisocyanates used are exclusive of a ring structure (such as, for instance, a benzene ring or a cyclohexane ring). Examples of polyisocyanates that are exclusive of a ring structure include, for instance, tetramethylene diisocyanate, 2,2,4 trimethyl-1,6-diisocyanate-hexane, and hexamethylene diisocyanate. Examples of polyisocyanates that include a ring structure are toluene diisocyanate, isophorone diisocyanate, diphenylmethane diisocyanate, hydrogenated diphenylmethane diisocyanate, and methylenebis(4-cyclohexylisocyanate).

Generally, the compound providing a radiation-curable terminus to the oligomer contains a functional group which can polymerize under the influence of actinic radiation and a functional group which can react with the diisocyanate. Hydroxy functional ethylenically unsaturated monomers are preferred. More preferably, the hydroxy functional ethylenically unsaturated monomer contains acrylate, methacrylate, vinyl ether, maleate or fumarate functionality.

In the reaction between hydroxy group of the compound providing the terminus and isocyanate groups of compound providing the linking sites, it is preferred to employ a stoichiometric balance between hydroxy and isocyanate functionality and to maintain the reaction temperature of at least 25°C. The hydroxy functionality should be substantially consumed. The hydroxy functional ethylenically unsaturated monomer attaches to the isocyanate via a urethane linkage. Monomers having (meth)acrylate functional groups include, for example, hydroxy functional (meth)acrylates such as 2-hydroxyethyl acrylate, 2-hydroxypropyl acrylate, and methacrylate analogs. Monomers having vinyl ether functional groups include, for example, 4-hydroxybutyl vinyl ether, and triethylene glycol monovinyl ether. Monomers having maleate functional groups include, for example, maleic acid and hydroxy functional maleates.

There is no particular limitation on the molecular weight of the oligomer, but the number average molecular weight of the oligomer in general can be less than 25,000 g/mol, and preferably, less than 10,000 g/mol, and more preferably, less than 5,000 g/mol. Molecular weight is preferably at least 500 g/mol, more preferably at least 1,000 g/mol, and most preferably at least 1,500 g/mol, particularly in case the oligomer is used for low modulus coatings.

The composition may optionally further comprise at least one photoinitiator. Photoinitiators are generally required in UV-cure applications but may be omitted for electron beam cure. Conventional photoinitiators can be used. Examples include benzophenones, acetophenone derivatives, such as alpha-hydroxyalkylphenylketones, benzoin alkyl ethers and benzil ketals, monoacylphosphine oxides, and bisacylphosphine oxides. A preferred photoinitiator is 1-hydroxycyclohexylphenylketone (Irgacure 184, Ciba Geigy).

Often mixtures of photoinitiators provide a suitable balance of properties. The amount of photoinitiator system is not particularly limited but will be effective to provide fast cure speed, reasonable cost, good surface and through cure, and lack of yellowing upon aging. Typical amounts can be, for example, 0.3 wt.% to 10 wt.%, and preferably, 1 wt.% to 7 wt.%.

The composition may further comprise any suitable additives such as, for instance, inorganic fillers, UV absorbers, chain transfer agents, antioxidants (e.g. Irganox 1035 available from Ciba Geigy), and/or adhesion promoters, *e.g.* silane adhesion promoters such as mercapto functional silane adhesion promoters (for instance gamma-mercaptopropyltrimethoxy silane). Such additives may be present in any suitable amount. Adhesion promoters, when used, are generally present in amount of at least 0.1 wt%, preferably at least 0.3wt%, more preferably at least 0.6 wt%, and most preferably at least 0.75 wt.%. Adhesion promoters, when used, are generally present in amounts below 10 wt.%, preferably below 5 wt.%, more preferably below 3 wt.%, and most preferably below 1.5 wt.%.

The cure speed of the present compositions (defined as the UV Dose required to achieve 95% of the maximum attainable modulus of a 75 $\mu$m thick layer of the composition) is preferably less than 0.30 J/cm$^2$, more preferably less than 0.25 J/cm$^2$, and most preferably less than 0.20 J/cm$^2$. Generally, the cure speed will be more than 0.02 J/cm$^2$.

The compositions of the present invention may have any suitable viscosity. Generally, the viscosity of the present compositions will be at least 100 cps at 25°C, preferably at least 750 cps, and most preferably at least 1,500 cps. The viscosity of the composition is generally below 20,000 cps at 25°C, preferably below 10,000 cps, and most preferably below 6000 cps. It is furthermore preferred that the composition has a viscosity between 1,000 and 3,000 cps in at least part of the temperature range 40-60°C, preferably in the entire range of 40-60°C.

The compositions of the present invention can be used in a variety of applications, such as, for instance, the applications discussed in the above background section. A preferred application is in the field of optical fibers. The present compositions may be used, for instance, to prepare (by curing the composition) inner primary optical fiber coatings, outer primary optical fiber coatings, and matrix materials for optical fiber ribbons. The field of inner primary optical fiber coatings is particularly preferred.

When used as inner primary coatings, the present compositions are formulated such that the secant modulus, after cure, is below 10 MPa, preferably below 3 MPa, more preferably below 1.5 MPa, and most preferably from 0.1-1.3 MPa. The elongation at break is preferably at least 75%, more preferably at least 90%, and most preferably from 100-200%. The tensile strength is preferably at least 0.6 MPa, more preferably at least 1 MPa, and most preferably at least 1.5 MPa. The glass transition temperature of the inner primary coating is preferably less than 0°C, more preferably less than -20°C, and most preferably less than -40°C.

When used as outer primary coatings, the present compositions are formulated such that the secant modulus, after cure, is at least 200 MPa, preferably at least 400 MPa, even more preferably at least 600 MPa. Generally, the secant modulus of outer primary coatings will be below 2000 MPa, preferably below 1500 MPa. The glass transition temperature of the outer primary coating is preferably at least 40°C, more preferably at least 60°C, and most preferably at least 80°C.

Examples

The following examples are given as particular embodiments of the invention and to demonstrate the practice and advantage thereof. It is to be understood that the examples are given by way of illustration and are not intended to limit the specification or the claims that follow in any manner.

Two composition (indicated as Example I, II) were prepared with the ingredients and properties listed in Table I. The amounts of the ingredients listed in Table I are in weight percentage relative to the total weight of the composition.

**Table I**

| Ingredient | Example I | Example II |
|---|---|---|
| H-TMDI-PPG2000-TDI-PTGL2000-TMDI-H | 53.6 | -- |
| H-TMD1-PPG2000-TDI-EOB02000-TMDI-H | -- | 69.00 |
| Ethoxylated lauryl acrylate | 33.30 | -17.70 |
| Vinyl Caprolactam | 5.00 | 5.00 |
| Bisphenol A ethoxylated diacrylate | 2.10 | 2.20 |
| Tinuvin 622 | 0.10 | 0.10 |

(continued)

| Ingredient | Example I | Example II |
|---|---|---|
| gamma-mercaptopropyl trimethoxysilane | 0.9 | 0.9 |
| Irgacure 1700 | 3.00 | 3.00 |
| Irgacure 184 | 2.00 | 2.00 |
| Test data: | | |
| Viscosity (cps, 25°C) | 4,900 | 5,300 |
| Glass transition temperature (tan δ max, °C) | -40 | -53 |
| Secant Modulus (MPa) | 1.04 | 1.14 |
| Elongation (%) | 147 | 107 |
| Cure Speed (J/cm$^2$) | 0.28 | 0.19 |

H = Hydroxyethylacrylate residue;
TMDI = 2,2,4-trimethylene-1,6-diisocyanate-hexane residue;
TDI = Toluenediisocyanate residue;
PPG2000 = polypropylene glycol residue having a molecular weight of about 2,000;
PTGL2000 = polymethyltetrahydrofurfuryl-polytetrahydrofurfuryl copolymer diol residue having a molecular weight of about 2,000;
EOBO2000 = is an ethyleneoxide-butyleneoxide copolymer residue having a molecular weight of about 2,000;
Irgacure 1700 = a photoinitiator available from Ciba Geigy;
Irgacure 184 = a photoinitiator available from Ciba Geigy;
Tinuvin 622 = UV absorber

In addition, two compositions were prepared (Example III and Comparative Example A) that were identical except that the ethoxylated isodecyl acrylate in Example III was replaced in Comparative Example A with an equal weight amount of non-ethoxylated isodecylacrylate. The ingredients and properties of these compositions are displayed in Table II (all wt% are relative to the total composition):

**Table II**

| | Example III | Comparative Example A |
|---|---|---|
| Urethane acrylate oligomer | 50 | 50 |
| Ethoxylated Isodecyl Acrylate | 12.3 | -- |
| Isodecyl Acrylate | -- | 12.3 |
| Ethoxylated nonyl phenol acrylate | 31 | 31 |
| Ethoxylated bisphenol A diacrylate | 0.1 | 0.1 |
| Irgacure 184 photoinitiator | 2 | 2 |
| Irgacure 1700 photoinitiator | 3.2 | 3.2 |
| Irganox 1035 antioxidant | 0.5 | 0.5 |
| gamma-mercaptopropyl trimethoxy silane adhesion promoter | 0.9 | 0.9 |
| Properties | | |
| Glass transition temperature (tan δ max, °C) | -26.6 | -23 |
| Tensile strength (MPa) | 0.566 | 0.522 |
| Secant Modulus (MPa) | 1.06 | 1.07 |
| Elongation at break (%) | 120 | 115 |

### Table III: FTIR Cure Behavior of Comparative Example A and Example III

| Time (sec) | Example III, %RAU | Comparative A, %RAU |
|---|---|---|
| 0 | 0 | 0 |
| 0.05 | 2.5 | 1.7 |
| 0.1 | 15.9 | 12.5 |
| 0.15 | 34.6 | 30.3 |
| 0.2 | 50.7 | 47.9 |
| 0.5 | 76 | 75 |
| 1 | 88.5 | 88.5 |
| 2 | 94.5 | 95.1 |
| 3 | 96.4 | 97.3 |
| 5 | 98 | 99 |

Examples IV and V and Comparative Examples B and C

Four further compositions were prepared, with the ingredients listed in Table IV (all amounts in wt% relative to the total weight of the composition). The FTIR cure speed of the examples (expressed in %RAU, i.e. percentage reacted acrylate unsaturation) is listed in Table V.

### Table IV

| Ingredients | Example IV | Comp. B | Example V | Comp. C |
|---|---|---|---|---|
| urethane acrylate oligomer | 60 | 60 | 60 | 60 |
| ethoxylated lauryl acrylate | 38 | -- | -- | -- |
| lauryl acrylate | -- | 38 | -- | -- |
| ethoxylated isodecyl acrylate | -- | -- | 38 | -- |
| isodecyl acrylate | -- | -- | -- | 38 |
| Irgacure 2020 | 2 | 2 | 2 | 2 |
| Test Data | | | | |
| Glass Transition Temp. (tan δ max, °C) | -11 | -3 | -15 | -6 |
| Viscosity (mPa.s, 25°C) | 2340 | 1400 | 2200 | 950 |
| Equilibrium Modulus (MPa) | 6.4 | 4.3 | 6.7 | 4.4 |
| E'=1000 MPa (°C) | -54 | -76 | -48 | -66 |
| E'= 100 MPa (°C) | -21 | -18 | -21 | -16 |
| Irgacure 2020 is a photoinitiator available from Ciba Geigy | | | | |

### Table V

| Time (sec) | Ex. IV | Comp. B | Ex. V | Comp. C |
|---|---|---|---|---|
| 0 | 0,0 | 0,0 | 0,0 | 0,0 |
| 0,05 | 4,0 | 1,3 | 1,4 | 0,1 |
| 0,1 | 19,8 | 2,5 | 16,6 | 0,4 |
| 0,15 | 53,0 | 8,3 | 52,1 | 11,9 |

(continued)

| Time (sec) | Ex. IV | Comp. B | Ex. V | Comp. C |
|---|---|---|---|---|
| 0,2 | 71,5 | 25,4 | 70,3 | 34,6 |
| 0,5 | 90,2 | 71,2 | 88,6 | 75,5 |
| 1 | 96,1 | 90,5 | 94,2 | 89,9 |
| 2 | 98,6 | 95,5 | 97,5 | 96,3 |
| 3 | 99,9 | 97,9 | 98,9 | 99,1 |
| 5 | 100,0 | 100,0 | 100,0 | 100,0 |

Testing methods:

Viscosity Test Method

The viscosity was measured using a PAAR Phisca VT-10 Viscometer. The test samples were examined and if an excessive amount of bubbles was present, steps were taken to remove most of the bubbles. Not all bubbles need to be removed at this stage, because the act of sample loading introduces some bubbles.

The instrument was set up for the conventional Z3 system, which was used. The samples were loaded into a disposable aluminum cup by using the syringe to measure out 17 cc. The sample in the cup was examined and if it contains an excessive amount of bubbles, they were removed by a direct means such as centrifugation, or enough time was allowed to elapse to let the bubbles escape from the bulk of the liquid. Bubbles at the top surface of the liquid are acceptable.

The bob was gently lowered into the liquid in the measuring cup, and the cup and bob were installed in the instrument. The sample temperature was allowed to equilibrate with the temperature of the circulating liquid by waiting five minutes. Then, the rotational speed was set to a desired value which will produce the desired shear rate. The desired value of the shear rate is easily determined by one of ordinary skill in the art from an expected viscosity range of the sample.

The instrument panel read out a viscosity value, and if the viscosity value varied only slightly (less than 2% relative variation) for 15 seconds, the measurement was complete. If not, it is possible that the temperature had not yet reached an equilibrium value, or that the material was changing due to shearing. If the latter case, further testing at different shear rates will be needed to define the sample's viscous properties. The results reported are the average viscosity values of three test samples.

Tensile Strength, Elongation and Modulus Test Method

The tensile strength, elongation and secant modulus of cured samples was tested using a universal testing instrument, Instron Model 4201 equipped with a personal computer and software "Series IX Materials Testing System." The load cells used were 2 and 20 pound capacity. The ASTM D638M was followed, with the following modifications.

A drawdown of each material to be tested was made on glass plate or Mylar (in particular, the outer primary coating compositions, unless otherwise noted, were measured on Mylar) and cured using a UV processor. The cured film was conditioned at 22 to 24°C and 50 $\pm$ 5% relative humidity for a minimum of sixteen hours prior to testing.

A minimum of eight test specimens, having a width of 5 $\pm$ 0.002 inches and a length of 5 inches, were cut from the cured film. To minimize the effects of minor sample defects, sample specimens were cut parallel to the direction in which the drawdown of the cured film was prepared. If the cured film was tacky to the touch, a small amount of talc was applied to the film surface using a cotton-tipped applicator.

The test specimens were then removed from the substrate. Caution was exercised so that the test specimens were not stretched past their elastic limit during the removal from the substrate. If any noticeable change in sample length had taken place during removal from the substrate, the test specimen was discarded.

If the top surface of the film was talc coated to eliminate tackiness, then a small amount of talc was applied to the bottom surface of test specimen after removal from the substrate.

The average film thickness of the test specimens was determined. At least five measurements of film thickness were made in the area to be tested (from top to bottom) and the average value used for calculations. If any of the measured values of film thickness deviates from the average by more than 10% relative, the test specimen was discarded. All specimens came from the same plate.

The appropriate load cell was determined by using the following equation:

$$[A \times 145] \times 0.0015 = C$$

Where: A = Product's maximum expected tensile strength (MPa);
145 = Conversion Factor from MPa to psi;
0.00015 = approximate cross-sectional area ($in^2$) of test specimens; and
C = lbs.

The 2 pound load cell was used for materials where C=1.8 lbs. The 20 pound load cell was used for materials where 1.8 < C < 18 lbs. If C > 19, a higher capacity load cell was required.

The crosshead speed was set to 1.00 inch/min (25.4 mm/min), and the crosshead action was set to "return at break". The crosshead was adjusted to 2.00 inches (50.8 mm) jaw separation. The air pressure for the pneumatic grips was turned on and adjusted as follows: set approximately 20 psi (1.5 Kg/$cm^2$) for primary optical fiber coatings and other very soft coatings; set approximately 40 psi (3Kg/$cm^2$) for optical fiber single coats; and set approximately 60 psi (4.5 Kg/$cm^2$) for secondary optical fiber coatings and other hard coatings. The appropriate Instron computer method was loaded for the coating to be analyzed.

After the Instron test instrument had been allowed to warm-up for fifteen minutes, it was calibrated and balanced following the manufacturer's operating procedures.

The temperature near the Instron Instrument was measured and the humidity was measured at the location of the humidity gage. This was done just before beginning measurement of the first test specimen.

Specimens were only analyzed if the temperature was within the range 23 ± 1.0°C and the relative humidity was within 50 ± 5%. The temperature was verified as being within this range for each test specimen. The humidity value was verified only at the beginning and the end of testing a set of specimens from one plate.

Each test specimen was tested by suspending it into the space between the upper pneumatic grips such that the test specimen was centered laterally and hanging vertically. Only the upper grip was locked. The lower end of the test specimen was pulled gently so that it has no slack or buckling, and it was centered laterally in the space between the open lower grips. While holding the specimen in this position, the lower grip was locked.

The sample number was entered and sample dimensions into the data system, following the instructions provided by the software package.

The temperature and humidity were measured after the last test specimen from the current drawdown was tested. The calculation of tensile properties was performed automatically by the software package.

The values for tensile strength, % elongation, and secant, or segment, modulus were checked to determine whether any one of them deviated from the average enough to be an "outlier." If the modulus value was an outlier, it was discarded. If there were less than six data values for the tensile strength, then the entire data set was discarded and repeated using a new plate.

Dynamic Mechanical Testing

The elastic modulus (E'), the viscous modulus (E"), and the tan delta (E"/E'), which is an indication of the material's Tg, of the examples were measured using a Rheometrics Solids Analyzer (RSA-11), equipped with: 1) a personal computer having MS-DOS 5.0 operating system and having Rhinos® software (Version 4.2.2 or later) loaded, and 2) a liquid nitrogen controller system for low-temperature operation.

The test samples were prepared by casting a film of the material, having a thickness in the range of 0.02 mm to 0.4 mm, on a glass plate. The sample film was cured using a UV processor. A specimen approximately 35 mm (1.4 inches) long and approximately 12 mm wide was cut from a defect-free region of the cured film. For soft films, which tend to have sticky surfaces, a cotton-tipped applicator was used to coat the cut specimen with talc powder.

The film thickness of the specimen was measured at five or more locations along the length. The average film thickness was calculated to ±0.001 mm. The thickness cannot vary by more than 0.01 mm over this length. Another specimen was taken if this condition was not met. The width of the specimen was measured at two or more locations and the average value calculated to ± 0.1 mm.

The geometry of the sample was entered into the instrument. The length field was set at a value of 23.2 mm and the measured values of width and thickness of the sample specimen were entered into the appropriate fields.

Before conducting the temperature sweep, moisture was removed from the test samples by subjecting the test samples to a temperature of 80°C in a nitrogen atmosphere for 5 minutes. The temperature sweep used included cooling the test samples to about -60°C or about -80°C and increasing the temperature at about 1 /minute until the temperature reached about 60°C to about 70°C. The test frequency used was 1.0 radian/second.. The DMA instrument produced a plot of the data on the computer screen. The temperature at which E' is 1,000 MPa and E' is 100 MPa was calculated from this plot, as well as the tan delta peak. The minimum value of E' attained in the rubbery region was measured and reported as the equilibrium modulus.

Cure speed FTIR test (%RAU)

The relative cure rates for ultraviolet cured coatings can be determined using FTIR transmission techniques. The method is applicable to coating systems that cure by loss of double bonds when exposed to ultraviolet light.

Equipment:

A Fourier transform infrared (FTIR) spectrophotometer, Nicolet 60SX or equivalent instrument is used. Instrument parameters are: TGS detector, 4 $cm^{-1}$ resolution and ten scans are co-added for each spectrum.
Infrared spectrometry is now well known and any infrared spectrometer can be utilized to obtain the infrared spectrum.
A Mercury UV lamp, 100 W, Oriel Corp. #6281 or equivalent is used. Alternative UV lamp systems capable of producing controlled short pulses of radiation may be substituted.

Sample preparation:

A Teflon spacer is placed onto the surface of a clean NaCl transmission window. By using a tip of a disposable glass pipette, a small drop of thoroughly mixed coating is placed in the center of the NaCl disc. A second NaCl disc is placed carefully on top of the drop of coating such that the coating spreads evenly to the edge of the spacer and such that no air bubbles are present in the coating.

Instrument set-up/standardization:

The UV lamp is turned on, then the FTIR is turned on. A background spectrum is collected with no sample in the IR beam path.

Procedure for analyzing samples:

For a first analysis of a coating system a standard procedure is followed to ensure that the coating thickness is constant for any one coating system. A 50 micron spacer is used for achieving a constant thickness. Therefore, the net absorbance of the unsaturation band from the peak minimum to the peak maximum is measured. The peak maximum should be in the 1.0 to 1.2 A range. The net absorbance will depend on the peak minimum. For coatings based on acrylate chemistry, the acrylate unsaturation band at 810 $cm^{-1}$ and a baseline at the minimum near 795 $cm^{-1}$ is used. This step is repeated three times and the average of the three absorbance values is taken as the net absorbance. This averaged value is used as a target absorbance for all future analyses of that particular coating system. This value is likely to differ for each coating system due to the differences in unsaturation content. The coating thickness is then adjusted by tightening the demountable cell holder screws until the net absorbance of the unsaturation band is within $\pm$ 0.05 A of the above described averaged value for the net absorbance. Spectra are collected, one right after another, until the net absorbance value stabilizes (the coating may take a few minutes to reach equilibrium).
Then, an infrared spectrum of the uncured, liquid sample and an infrared spectrum of the cured sample are obtained by varying the exposure times between 0.05 and 5 seconds. Exposure times may vary depending on the coating system, for example, fast curing coating systems require shorter exposure times.
The net peak area of the acrylate unsaturation absorbance for the uncured liquid sample is measured. For most acrylate-based coatings, the absorbance at about 810 $cm^{-1}$ should be used. However, if the coating contains a siloxane or other component which absorbs strongly at or near 810 $cm^{-1}$, an alternative acrylate absorbance peak can be used. The absorbances at about 1410 $cm^{-1}$ and about 1635 $cm^{-1}$ have been found to be satisfactory. The net peak area can be measured using the well known baseline technique in which a baseline is drawn tangent to absorbance minima on either side of the peak. The area above the baseline and under the peak is the net peak area. Figure 3 gives a representation of the baseline technique and shows how the net area under the unsaturation band is determined.
A reference area is then determined. The reference absorbance should not change in intensity as the liquid sample is cured. Many formulations have an absorbance in the range of about 780 to about 750 $cm^{-1}$ that can be used as a reference absorbance. The net peak area of the reference absorbance is measured.
Both sample and reference are measured in triplicate for each exposure time.

Calculations:

The ratio of the acrylate absorbance to the reference absorbance for the uncured, liquid sample is determined using the following formula:

$$R_L = A_{AL} / A_{RL}$$

where

$A_{AL}$ is the net peak area of the acrylate absorbance (under the acrylate band),
$A_{RL}$ is the net peak area of the reference absorbance, and
$R_L$ is the area ratio for the liquid sample.

The ratio of the acrylate absorbance to the reference absorbance for the cured sample is determined using the following formula:

$$R_C = A_{AC} / A_{RC}$$

where

$A_{AC}$ is the net peak area of the acrylate absorbance,
$A_{RC}$ is the net peak area of the reference absorbance, and
$R_C$ is the area ratio for the cured sample.

The degree of cure as a percent reacted acrylate unsaturation (%RAU) is determined using the following formula:

$$\%RAU = [(R_L - R_C) \times 100\%] / R_L$$

The average %RAU is determined for the triplicate analyses for each time exposure for both sample and reference. The time of exposure are then plotted versus %RAU for both sample and reference.
The precision of the data used to obtain the exposure time versus %RAU plot varies over the course of the plot. At exposure times where the curve is not steep, values ± 2% (absolute) of the average value are acceptable. At exposure times where the curve is very steep, values ± 7% (absolute) of the average value are acceptable.
Having described specific embodiments of the present invention, it will be understood that many modifications thereof will readily be apparent to those skilled in the art, and it is intended therefore that this invention is limited only by the spirit and scope of the following claims.

**Claims**

1. A radiation-curable optical fiber coating composition comprising:

(a) a radiation-curable oligomer; and
(b) an alkoxylated aliphatic reactive diluent comprising alkoxy groups and one or more radiation-curable functional groups, wherein

i) said alkoxylated aliphatic reactive diluent comprises, not taking into account the carbon atoms present in the alkoxy groups and the radiation-curable groups, at least 7 carbon atoms; or
ii) said aliphatic reactive diluent has one radiation-curable functional groups and on average at least two alkoxy moieties.

2. The coating composition according to claim 1, comprising, relative to the total weight of said coating composition, 1-50 wt% of said aliphatic reactive diluent.

3. The coating composition according to any one of claims 1-2, comprising, relative to the total weight of said coating composition, at least 35 wt% of said radiation-curable oligomer.

4. The coating composition according to any one of claims 1-3, wherein said aliphatic reactive diluent comprises an aliphatic moiety having at most 20 carbon atoms.

5. The coating composition according to any one of claims 1-4, wherein said aliphatic reactive diluent comprises an aliphatic moiety having 8-15 carbon atoms.

6. The coating composition according to any one of claims 1-5, wherein said aliphatic reactive diluent comprises an acrylate functional group.

7. The coating composition according to any one of claims 1-6, wherein said aliphatic reactive diluent is absent any ring structure.

8. The coating composition according to any one of claims 1-7, further comprising an additional reactive diluent.

9. The coating composition according to any one of claims 1-8, further comprising a silane adhesion promoter.

10. The coating composition according to any one of claims 1-8, further comprising, relative to the total weight of the composition, at least 0.6 wt% of gamma-mercaptopropyl trimethoxysilane.

11. The coating composition according to any one of claims 1-10, further comprising a photoinitiator.

12. The coating composition according to any one of claims 1-12, wherein said coating composition has a cure speed of less than 0.30 J/cm$^2$, whereby the cure speed of the composition is defined as the U-V dose required to achieve 95 % of the maximum attainable modulus of a 75 μm thick layer of the composition.

13. A coated optical fiber comprising a coating obtained by curing the coating composition according to any one of claims 1-12.

14. The fiber of claim 13, wherein said coating is an inner primary coating.

15. The fiber of claim 14, wherein said coating has a secant modulus, after cure, of less than 1.5 MPa.

16. The fiber of claim 13, wherein said coating is an outer primary coating.

17. The fiber of claim 16, wherein said coating has a secant modulus, after cure, of at least 200 MPa.


**Patentansprüche**

1. Durch Strahlung härtbare Beschichtungszusammensetzung für optische Fasern, umfassend

(a) ein durch Strahlung härtbares Oligomer; und
(b) ein alkoxyliertes, aliphatisches, reaktives Verdünnungsmittel, das Alkoxygruppen und eine oder mehr durch Strahlung härtbare funktionelle Gruppen umfasst, worin

i) das alkoxylierte, aliphatische, reaktive Verdünnungsmittel mindestens 7 Kohlenstoffatome umfasst, wobei die Kohlenstoffatome, die in den Alkoxygruppen und den durch Strahlung härtbaren Gruppen vorliegen, nicht berücksichtig werden; oder
ii) das aliphatische, reaktive Verdünnungsmittel eine durch Strahlung härtbare funktionelle Gruppe und im Mittel mindestens zwei Alkoxyreste aufweist.

2. Beschichtungszusammensetzung gemäß Anspruch 1, die bezogen auf das Gesamtgewicht der Beschichtungszusammensetzung 1 bis 50 Gew.% des aliphatischen reaktiven Verdünnungsmittels umfasst.

3. Beschichtungszusammensetzung gemäß irgendeinem der Ansprüche 1 bis 2, die in Bezug auf das Gesamtgewicht der Beschichtungszusammensetzung mindestens 35 Gew.% des durch Strahlung härtbaren Oligomers umfasst.

4. Beschichtungszusammensetzung gemäß irgendeinem der Ansprüche 1 bis 3, worin das aliphatische, reaktive Verdünnungsmittel einen aliphatischen Rest mit höchsten 20 Kohlenstoffatomen umfasst.

5. Beschichtungszusammensetzung gemäß irgendeinem der Ansprüche 1 bis 4, worin das aliphatische, reaktive Verdünnungsmittel einen aliphatischen Rest mit 8 bis 15 Kohlenstoffatomen umfasst.

6. Beschichtungszusammensetzung gemäß irgendeinem der Ansprüche 1 bis 5, worin das aliphatische, reaktive Verdünnungsmittel eine funktionelle Acrylatgruppe umfasst.

7. Beschichtungszusammensetzung gemäß irgendeinem der Ansprüche 1 bis 6, worin das aliphatische, reaktive Verdünnungsmittel keine Ringstruktur aufweist.

8. Beschichtungszusammensetzung gemäß irgendeinem der Ansprüche 1 bis 7, ferner umfassend ein zusätzliches reaktives Verdünnungsmittel.

9. Beschichtungszusammensetzung gemäß irgendeinem der Ansprüche 1 bis 8, ferner umfassend einen Silan-Adhäsionsförderer.

10. Beschichtungszusammensetzung gemäß irgendeinem der Ansprüche 1 bis 8, ferner umfassend mindestens 0,6 Gew.% Gamma-Mercaptopropyltrimethoxysilan, bezogen auf das Gesamtgewicht der Zusammensetzung.

11. Beschichtungszusammensetzung gemäß irgendeinem der Ansprüche 1 bis 10, ferner umfassend einen Fotoinitiator.

12. Beschichtungszusammensetzung gemäß irgendeinem der Ansprüche 1 bis 12, worin die Beschichtungszusammensetzung eine Härtungsgeschwindigkeit von kleiner als 0,30 J/cm$^2$ aufweist, wobei die Härtungsgeschwindigkeit der Zusammensetzung als die UV-Dosis definiert ist, die erforderlich ist, um 95 % des maximal erreichbaren Moduls einer 75 $\mu$m dicken Schicht der Zusammensetzung zu erreichen.

13. Beschichtete optische Faser, umfassend eine Beschichtung, die erhalten wird durch Härten der Beschichtungszusammensetzung gemäß irgendeinem der Ansprüche 1 bis 12.

14. Faser gemäß Anspruch 13, worin die Beschichtung eine innere Primärbeschichtung ist.

15. Faser gemäß Anspruch 14, worin die Beschichtung ein Sekantenmodul nach dem Härten von weniger als 1,5 MPa aufweist.

16. Faser gemäß Anspruch 13, worin die Beschichtung eine äußere Primärbeschichtung ist.

17. Faser gemäß Anspruch 16, worin die Beschichtung ein Sekantenmodul nach dem Härten von mindestens 200 MPa aufweist.

**Revendications**

1. Composition de revêtement de fibre optique radiodurcissable comprenant :

   (a) un oligomère radiodurcissable ; et
   (b) un diluant réactif aliphatique alcoxylé comprenant des groupes alcoxy et un ou plusieurs groupes fonctionnels radiodurcissables, où

      i) ledit diluant réactif aliphatique alcoxylé comprend au moins 7 atomes de carbone, compte non tenu des atomes de carbone présents dans les groupes alcoxy et les groupes radiodurcissables ; ou
      ii) ledit diluant réactif aliphatique a un groupe fonctionnel radiodurcissable et en moyenne au moins deux fractions alcoxy.

2. Composition de revêtement selon la revendication 1, comprenant, par rapport au poids total de ladite composition de revêtement, 1 à 50 % en poids dudit diluant réactif aliphatique.

3. Composition de revêtement selon l'une quelconque des revendications 1 et 2, comprenant, par rapport au poids total de ladite composition de revêtement, au moins 35 % en poids dudit oligomère radiodurcissable.

4. Composition de revêtement selon l'une quelconque des revendications 1 à 3, où ledit diluant réactif aliphatique comprend une fraction aliphatique ayant au plus 20 atomes de carbone.

5. Composition de revêtement selon l'une quelconque des revendications 1 à 4, où ledit diluant réactif aliphatique comprend une fraction aliphatique ayant 8 à 15 atomes de carbone.

6. Composition de revêtement selon l'une quelconque des revendications 1 à 5, où ledit diluant réactif aliphatique comprend un groupe fonctionnel acrylate.

7. Composition de revêtement selon l'une quelconque des revendications 1 à 6, où ledit diluant réactif aliphatique est dépourvu de toute structure cyclique.

8. Composition de revêtement selon l'une quelconque des revendications 1 à 7, comprenant en outre un diluant réactif additionnel.

9. Composition de revêtement selon l'une quelconque des revendications 1 à 8, comprenant en outre un promoteur d'adhérence de type silane.

10. Composition de revêtement selon l'une quelconque des revendications 1 à 8, comprenant en outre, par rapport au poids total de la composition, au moins 0,6 % en poids de gamma-mercaptopropyltriméthoxysilane.

11. Composition de revêtement selon l'une quelconque des revendications 1 à 10, comprenant en outre un photoamorceur.

12. Composition de revêtement selon l'une quelconque des revendications 1 à 12, où ladite composition de revêtement a une vitesse de durcissement inférieure à 0,30 J/cm$^2$, où la vitesse de durcissement de la composition est définie comme étant la dose d'UV nécessaire pour obtenir 95 % du module maximal possible d'une couche de composition de 75 $\mu$m d'épaisseur.

13. Fibre optique revêtue comprenant un revêtement obtenu par durcissement de la composition de revêtement selon l'une quelconque des revendications 1 à 12.

14. Fibre selon la revendication 13, où ledit revêtement est un revêtement primaire interne.

15. Fibre selon la revendication 14, où, après durcissement, ledit revêtement a un module sécant inférieur à 1,5 MPa.

16. Fibre selon la revendication 13, où ledit revêtement est un revêtement primaire externe.

17. Fibre selon la revendication 16, où, après durcissement, ledit revêtement a un module sécant d'au moins 200 MPa.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 566801 A
- WO 9103499 A
- US 5146531 A
- US 5219896 A
- US 5336563 A
- WO 9908975 A
- US 5031120 A, Pomerantz
- US 4575330 A, Hull
- US 5418112 A
- US 5434196 A
- US 4310919 A
- US 4423137 A
- US 5093386 A